# EUROPÄISCHE PATENTSCHRIFT

(11) **EP 2 853 551 B1**
(45) Veröffentlichungstag und Bekanntmachung des Hinweises auf die Patenterteilung: **07.11.2018**
(21) Anmeldenummer: 14185880.3
(22) Anmeldetag: 23.09.2014
(51) Int. Cl.: C08G 63/676, C08G 63/692

(54) **Flüssiger haftungsverbessernder Zusatz und Verfahren zu dessen Herstellung**
Additive for improving liquid adhesion and method for producing the same
Additif liquide améliorant l'adhérence et son procédé de fabrication

(30) Priorität: 27.09.2013 DE 102013219555
(43) Veröffentlichungstag der Anmeldung: 01.04.2015
(73) Patentinhaber: Evonik Degussa GmbH, 45128 Essen (DE)
(72) Erfinder: Alzer, Heiko, 45481 Mülheim an der Ruhr (DE); Heußen, Ingrid, 45665 Recklinghausen (DE); Herrwerth, Sascha, 45134 Essen (DE); Veit, Thomas, 58097 Hagen (DE); Ewald, Michael, 45768 Marl (DE); Retzlaff, Erika, 45772 Marl (DE); Jörres, Tanja, 46569 Hünxe (DE); Siebers, Annika, 47906 Kempen (DE)

(56) Entgegenhaltungen:
- EP-A1- 0 582 909
- EP-A2- 0 451 588
- EP-A2- 1 398 337
- US-A1- 2012 289 673

## Beschreibung

Die vorliegende Erfindung betrifft Polyester auf Basis von Di- oder Polycarbonsäuren und Diolen, wobei die Polyester mindestens eine ungesättigte Di- oder Polycarbonsäure und mindestens ein alkoxyliertes Diol enthalten, Verfahren zu deren Herstellung und deren Verwendung.

Ungesättigte amorphe Polyesterharze (UP-Harze) werden durch Kondensation von gesättigten und ungesättigten Dicarbonsäuren oder deren Anhydriden mit Diolen hergestellt. Ihre Eigenschaften hängen weitgehend von Art und Mengenverhältnis der Ausgangsstoffe ab. Der Einsatz solcher ungesättigten amorphen Polyesterharze zur Verbesserung der Haftung ist seit langem bekannt und beispielsweise beschrieben in DE 2409800, EP 114208 und EP 934988. Dabei vermitteln in der Regel Carboxylgruppen im Polyesterharz die Haftung zum Substrat, während verbleibende Hydroxylgruppen beispielsweise in 2K-Systemen oder polymerisationsfähige Doppelbindungen in oxidativ trocknenden oder strahlenhärtenden Systeme einreagieren.

Als Träger der polymerisationsfähigen Doppelbindungen werden häufig α, β-ungesättigte Säuren verwendet, in erster Linie Maleinsäure bzw. deren Anhydrid oder Fumarsäure. Neben Fumar- und Maleinsäure bzw. deren Anhydrid stehen als weitere polymerisationsfähige Säuren unter anderem z. B. auch Citracon-, Itacon und/oder Mesaconsäure zur Verfügung. Ungesättigte Diole sind von untergeordneter Bedeutung. Die Reaktivität eines Polyesterharzes steigt dabei mit steigendem Gehalt an Doppelbindungen und führt bei hoher Vernetzung zu einem verhältnismäßig spröden Endprodukt. Die gewünschte Sprödigkeit wird deshalb durch CoKondensation mit gesättigten aliphatischen oder aromatischen Dicarbonsäuren eingestellt.

Die einzelnen UP-Harztypen unterscheiden sich nicht nur durch die zu ihrer Herstellung verwendeten Komponenten, sondern auch durch das Mengenverhältnis von gesättigten zu ungesättigten Säuren, das die Vernetzungsdichte bei der Polymerisation bestimmt, den Kondensationsgrad, d. h. die Molmasse, die Säure-und OH-Zahl, d. h. die Art der Endgruppen in den Kettenmolekülen, den Monomergehalt sowie die Art der Zusätze (Ullmann's Encyclopedia of Industrial Chemistry, VOL A21, S. 217ff., 1992).

Darüber hinaus ist es auch bekannt, zusätzlich aromatische und/oder aliphatische und/oder cycloaliphatische Monocarbonsäuren und/oder Dicarbonsäuren und/oder Polycarbonsäuren einzusetzen, wie z. B. Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydro-phthalsäure, Tetrahydrophthalsäure, Dodecandisäure, Adipinsäure, Azelainsäure, Isononansäure, 2-Ethylhexansäure, Pyromellitsäure und/oder Trimellitsäure.

Als Diolkomponente werden vielfach lineare und/oder verzweigte, aliphatische und/oder cycloaliphatische und/oder aromatische Diole und/oder Polyole verwendet. Beispiele hierfür sind Ethylenglykol, 1,2- und/oder 1,3-Propandiol, Diethylen-, Dipropylen-, Triethylen-, Tetraethylenglykol, 1,2- und/oder 1,4-Butandiol, 1,3-Butylethylpropandiol, 1,3-Methylpropandiol, 1,5-Pentandiol, Cyclohexandimethanol, Glycerin, Hexandiol, Neopentylglycol, Trimethylolethan, Trimethylolpropan und/oder Pentaerythrit sowie Bisphenol A, B, C, F, Norbornylenglykol, 1,4-Benzyldimethanol und -ethanol, 2,4-Dimethyl-2-ethylhexan-1,3-diol.

Insbesondere die Verwendung von Dicidol (Tricyclodecandimethanol, Octahydro-4,7-methano-1H-indendimethanol) als Diolkomponente für die Herstellung ungesättigter Polyesterharze ist umfassend beschrieben, beispielsweise in DE 953117, DE 2245110, DE 2721989, EP 114208, EP 934988. Tricyclodecandimethanol besteht hauptsächlich aus den isomeren Verbindungen 3,8-Bis(hydroxymethyl)tricyclo [5.2.1.0^{2,6}]decan, 4,8-Bis(hydroxymethyl)tricyclo [5.2.1.0^{2,6}]decan und 5,8-Bis(hydroxymethyl)tricyclo [5.2.1.0^{2,6}]decan. Der Zusatz von Dicidol bewirkt dabei eine Verbesserung der Klebfreiheit sowohl des reinen Polyesterharzes als auch später im getrockneten Film und eine positive Beeinflussung der Lagerstabilität des Harzes. Auch die Durchtrocknung des Überzugs wird durch die Verwendung von Dicidol verbessert.

Die beschriebenen Polyesterharze des Stands der Technik sind insbesondere bei Verwendung von Dicidol jedoch Festharze. Die Dosierung von Feststoffen ist aber oftmals gerade bei kleinen und mittleren Überzugsstoffe herstellenden Firmen schwierig. Die Zugabe von Feststoffen muss körperlich aufwändig über Sackschütten erfolgen. Die entstehenden Stäube bergen neben dem arbeitsphysiologischen Nachteil auch Sicherheitsprobleme, denn Feststoffe können grundsätzlich zu Staubexplosionen führen.

Festharze können grundsätzlich auch gelöst in organischen Lösemitteln dosiert werden. Die Dosierung in gelöster Form birgt jedoch den Nachteil, dass der Anwender zum einen die Lösemittelvorgabe des Herstellers akzeptieren muss. Zum anderen ist die Formulierung gerade moderner High-Solid Beschichtungen bei einem oftmals notwendigen Lösemittelanteil von bis zu 50 Gew.-% zur Erreichung einer verarbeitbaren Lösungsviskosität des Festharzes unmöglich.

DE 2402841 beschreibt lösungsmittelarme, niedrigviskose Polyester sowie deren Umsetzung mit Aminoplasten zu schlagfesten Überzügen. Eine analoge Lehre findet sich in DE 2454025. Die in den genannten Dokumenten offenbarten Polyester basieren auf Bisphenol A.

EP 0 451 588 A2 beschreibt Polyester aus ungesättigen Carbonsäuren und mindestens einem Polyalkylenglykol, mindestens einem Allylether-funktionellen Alkohol und mindestens einem alkoxylierten Triol.

Die EP 0 582 909 A1 lehrt den Einsatz von alkoxyliertem Butendiol.

US 2012/289673 A1 lehrt die Herstellung phosphathaltiger ungesättigter Polyester.

Die EP 1 398 337 A2 beschreibt ungesättigte Polyester aus ungesättigten Dicarbonsäuren und Tricyclododecandimethanol.

Aufgabe der vorliegenden Erfindung war es daher, einen haftverbessernden Zusatz zu finden, der Eigenschaften von Beschichtungsstoffen wie z. B. die Haftung oder den nicht flüchtigen Anteil verbessert, mit dem aber gleichzeitig der Zusatz weiterer Lösemittel vermieden werden kann. Der haftverbessernde Zusatz soll darüber hinaus eine generelle Wirksamkeit in allen Bindemittelsystemen haben.

Die vorab genannte komplexe Aufgabe wird durch Polyester gemäß der vorliegenden Weise in erfinderischer Weise gelöst.

Ein erster Gegenstand der vorliegenden Erfindung sind Polyester auf Basis von Di-oder Polycarbonsäuren und Diolen, wobei die Polyester mindestens eine ungesättigte Di- oder Polycarbonsäure und mindestens ein alkoxyliertes Diol enthalten, vorzugsweise mit der Maßgabe, dass die Polyester kein Bisphenol A, B, C, F oder Derivate davon enthalten.

Die Polyester gemäß der vorliegenden Erfindung haben den Vorteil, dass durch Einsatz mindestens einer alkoxylierten Alkoholkomponente als Monomerbaustein ein bei 23°C und einem Druck von 101325 Pa flüssiger Polyester erhalten werden kann. Somit kann überraschenderweise der flüssige Aggregatzustand einer alkoxylierten Alkoholkomponente bei Verwendung als Monomerbaustein auf ein festes ungesättigtes amorphes Polyesterharz übertragen werden. Dies ist insbesondere überraschend und für den Fachmann nicht vorhersehbar, da die Übertragung dieser Eigenschaft grundsätzlich nicht immer gelingt. So sind beispielsweise Polymerisate aus flüssigem Styrol und festem Maleinsäureanhydrid oder Homopolymere aus flüssigem Methylmethacrylat nicht flüssig.

Anders als die in DE 2402841 oder DE 2454025 offenbarten Polyester enthalten die erfindungsgemäßen Polyester vorzugsweise kein Bisphenol A, B, C, F oder Derivate davon. Die nervenschädigende und krebserregende Wirkung von Bisphenol A ist hinlänglich bekannt und dessen Verwendung in beispielsweise Babyflaschen aus Polycarbonat seit dem Jahre 2011 verboten. Seit April 2012 findet eine Neubewertung von Bisphenol A durch die europäische Behörde für Lebensmittelsicherheit statt, mit weiteren Regulierungen von Bisphenol A-Derivaten ist zu rechnen. Zudem entfalten die Polyester aus DE 2402841 oder DE 2454025 ihre Wirkung, beispielsweise Beständigkeit und Elastizität, nur bei Verwendung als Vernetzer (Diolkomponente in 2-Komponenten-Bindemittelsystemen). Eine Haftungsverbesserung durch Zugabe des Polyesters alleine, wie im Falle der vorliegenden Erfindung, wird nicht beschrieben.

Im Folgenden werden die erfindungsgemäßen Polyester näher beschrieben, wobei nachfolgend für die erfindungsgemäßen Polyester auch der Begriff "Polyesterharze" verwendet wird.

Die erfindungsgemäßen Polyesterharze werden durch Umsetzung von Di- oder Polycarbonsäuren und Diolen erhalten, wobei mindestens eine ungesättigte Di- oder Polycarbonsäure und mindestens eine alkoxylierte Alkoholkomponente eingesetzt werden. Damit handelt es sich bei den erfindungsgemäßen Polyestern um ungesättigte Polyester.

Die erfindungsgemäßen Polyesterharze enthalten als Ausgangssäurekomponente mindestens eine ungesättigte Di- oder Polycarbonsäure, insbesondere eine α, β-ungesättigte Di- oder Polycarbonsäure. Bevorzugt werden Citracon-, Fumar-, Itacon-, Malein- und/oder Mesaconsäure als ungesättigte Di- oder Polycarbonsäure eingesetzt.

Neben den vorab genannten ungesättigten Di- oder Polycarbonsäuren können zusätzlich auch aromatische und/oder aliphatische und/oder cycloaliphatische Mono-, Di-, Polycarbonsäuren und/oder Phosphorsäuren enthalten sein. Als aromatische und/oder aliphatische und/oder cycloaliphatische Mono-, Di-, Polycarbonsäuren eignen sich beispielsweise Phthalsäure, Isophthalsäure, Terephthalsäure, 1,4-Cyclohexandicarbonsäure, Bernsteinsäure, Sebazinsäure, Methyltetra-, Methylhexahydrophthalsäure, Hexahydrophthalsäure, Tetrahydrophthalsäure, Dodecandisäure, Adipinsäure, Azelainsäure, Isononansäure, 2-Ethylhexansäure, Pyromellitsäure und/oder Trimellitsäure. Bevorzugt sind Phthalsäure, Hexahydrophthalsäure, Tetrahydrophthalsäure, Adipinsäure, Trimellithsäure- und/oder Isophthalsäure.

Als Phosphorsäuren eignen sich Phosphorverbindungen ausgewählt aus Phosphorsäure, Phosphorylchlorid und Polyphosphorsäure (P₂O₅ gelöst in H₃PO₄), bevorzugt Phosphorylchlorid oder Polyphosphorsäure (P₂O₅ gelöst in H₃PO₄) und besonders bevorzugt Polyphosphorsäure (P₂O₅ gelöst in H₃PO₄) eingesetzt. Eine geeignete Polyphosphorsäure ist z. B. die mit CAS-No. 8017-16-1 bezeichnete Polyphosphorsäure mit 84 Gew.-% Gehalt an P₂O₅ gelöst in H₃PO₄ der Firma Clariant.

Die vorab als Bestandteile des Polyesters genannten Säurekomponenten umfassen im Rahmen der vorliegenden Erfindung die entsprechenden Säurederivate, insbesondere Anhydride und/oder Alkylester, bevorzugt Methylester.

Die Anteile der α, β-ungesättigten Säuren im Verhältnis zur zusätzlichen Säure kann von 5: 1 bis 1: 5 variieren. Bevorzugt sind Verhältnisse von 4:1 bis 1:4, besonders bevorzugt liegen Verhältnisse von 2 : 1 bis 1 : 2 vor. Der Begriff "zusätzliche Säure" bezieht sich dabei sowohl auf einzelne Säuren als auch auf Mischungen von Säuren, das vorab beschriebene Verhältnis bezieht sich auf die Gesamtheit aller eingesetzten, nicht α, β-ungesättigten Säuren.

Weiterhin enthalten die erfindungsgemäßen Polyester Diole, wobei mindestens eine alkoxylierte Alkoholkomponente enthalten sein muss, das heißt mindestens einer der zur Herstellung der erfindungsgemäßen Polyester eingesetzten Diole muss alkoxyliert sein. Erfindungsgemäß wird eine Verbindung ausgewählt aus der Gruppe umfassend Tricyclodecandimethanol, 1,2-Propandiol, Cyclohexandimethanol und Neopentylglycol eingesetzt. Insbesondere bevorzugt enthalten die erfindungsgemäßen Polyester kein Bisphenol A, B, C, F.
Die Alkoxylierung des Diols erfolgt mit Epoxiden. Beispiele für Epoxide, mit denen die vorab genannten Diole alkoxyliert sind, sind Ethylenoxid und/oder Propylenoxid.
Die alkoxylierten Alkoholkomponenten zeichnen sich dadurch aus, dass diese Verbindungen der allgemeinen Formel (I)

R-O(CH₂CH₂O)ₐ(CH₂CHCH₃O)_{b}-H (I)

genügen, mit
R = Tricyclodecandimethanol, 1,2-Propandiol, Cyclohexandimethanol und Neopentylglycol, vorzugsweise Tricyclodecandimethanol
a = 0 bis 20, bevorzugt 5 bis 12, und/oder
b = 0 bis 20, bevorzugt 5 bis 12,
mit der Maßgabe, dass a+b ≥ 1 ist.

Der Anteil der alkoxylierten Diole, bezogen auf die Gesamtmenge an im erfindungsgemäßen Polyester enthaltenen Diolen, beträgt mindestens 60 Mol-%, bevorzugt mindestens 75 Mol-% und besonders bevorzugt mindestens 90 Mol-%. Vorzugsweise beträgt das Mol-Verhältnis des alkoxylierten Diols zur Säurekomponente 0,5 - 2 : 1, bevorzugt 0,8 - 1,5 : 1. Besonders bevorzugt beträgt das Mol-Verhältnis des alkoxylierten Diols zur Säurekomponente 1,0 - 1,1 : 1. Unter "Säurekomponente" wird in diesem Zusammenhang die Gesamtheit aller enthaltenen Säuren verstanden.

Die erfindungsgemäßen Polyester sind bei 23°C und einem Druck von 101325 Pa fließfähig, vorzugsweise flüssig.
Darüber hinaus weisen die erfindungsgemäßen Polyester vorzugsweise eine Säurezahl, bestimmt nach DIN EN ISO 2114, zwischen 1 und 150 mg KOH/g, bevorzugt zwischen 1 und 100 und besonders bevorzugt zwischen 1 und 50 mg KOH/g auf. Unter der Säurezahl (SZ) versteht man diejenige Menge Kaliumhydroxid in mg, die zur Neutralisation der in einem Gramm Substanz enthaltenen Säuren erforderlich ist. Die zu untersuchende Probe wird in Dichlormethan gelöst und mit 0,1 N ethanolischer Kalilauge gegen Phenolphthalein titriert.

Darüber hinaus weisen die erfindungsgemäßen Polyester insbesondere eine OH-Zahl zwischen 1 und 200 mg KOH/g, bevorzugt zwischen 1 und 180 und besonders bevorzugt zwischen 1 und 150 mg KOH/g auf. Im Rahmen der vorliegenden Erfindung erfolgt die Bestimmung der OH-Zahlen nach DIN 53240-2. Bei diesem Verfahren wird die Probe mit Essigsäureanhydrid in Gegenwart von 4-Dimethylaminopyridin als Katalysator umgesetzt, wobei die Hydroxylgruppen acetyliert werden. Dabei entsteht pro Hydroxylgruppe ein Molekül Essigsäure, während die anschließende Hydrolyse des überschüssigen Essigsäureanhydrids zwei Moleküle Essigsäure liefert. Der Verbrauch an Essigsäure wird titrimetrisch aus der Differenz zwischen Hauptwert und einem parallel durchzuführenden Blindwert ermittelt.

Die erfindungsgemäßen, bei 23°C und 101325 Pa fließfähigen Polyester weisen insbesondere eine Viskosität zwischen 0 Pas und 3000 Pas, bevorzugt zwischen 1 Pas und 1000 Pas, besonders bevorzugt zwischen 1 Pas und 100 Pas auf, gemessen mit einem Anton Paar Rotationsviskosimeter M102 und der Messgeometrie CP50/2 bei 23°C und einer Scherrate von 1/100s.

Die erfindungsgemäßen, Polyester weisen insbesondere ein Zahlenmittel der relativen Molmasse Mn zwischen 500 und 5000 g/mol, bevorzugt zwischen 750 und 4000 g/mol, besonders bevorzugt zwischen 1000 und 3000 g/mol auf. Diese lassen sich in einer für den Fachmann geläufigen Weise über die Molverhältnisse der reaktiven Gruppen der Rohstoffe einstellen. Die relativen Molmassen werden im Rahmen der vorliegenden Erfindung durch Größenausschlusschromatographie (SEC) bestimmt. Dazu werden drei Säulen der Fa. Merck (PS 400, 250*7 mm, PS 40, 250*7 mm, und PS 1, 250*7 mm) mit einer Teilchengröße von 5 µm in Reihe kombiniert. Nach der Kalibration werden 20 µl der Polyesterlösung in Tetrahydrofuran (c(Polyester)= 20 mg/ml) bei 40 °C mit einem Rheodyne 7125 Injektor injiziert und mit einer Flussrate von 1 ml/min (HPLC Pumpe 510 von Waters) bei 40 °C mit entgastem Tetrahydrofuran als mobiler Phase und einem Differentialrefraktometer bei 40 °C (Model 410 von Waters) analysiert. Die Auswertung erfolgt nach Kalibration gegen Polystyrolstandards, die in der zuvor beschriebenen Weise durchgeführt wird. Polystyrolstandards (Standard 1 Mp 377400, Mp 96000, Mp 20650, Mp 1300, Mp 162; Standard 2 Mp 283300, Mp 50400, Mp 10850, Mp 2930, Mp 980; Standard 3 Mp 218800, Mp 68900, Mp 10050, Mp 1940, Mp 580; Mp = Molare Masse im Peakmaximum) sind beispielsweise bei der Fa. Merck oder der Fa. Polymer Laboratories kommerziell erhältlich.

In einer besonders bevorzugten Ausführungsform wird als Diol das ethoxylierte oder propoxylierte Tricyclodecandimethanol der isomeren Verbindungen 3,8-Bis(hydroxymethyl)tricyclo[5.2.10^{2,6}]decan, 4,8-Bis(hydroxymethyl)tricyclo [5.2.1.0^{2,6}]decan und 5,8-Bis(hydroxymethyl)tricyclo[5.2.10^{2,6}]decan und als Di-oder Polycarbonsäuren ein Gemisch aus Fumarsäure und/oder Maleinsäure bzw. deren Anhydrid und Adipinsäure verwendet. Das bevorzugte molare Verhältnis von Alkoholzu Säurekomponente beträgt 0,9:1,1 bis 1,1:0,9, wobei unter "Alkohol- bzw. Säurekomponente" in diesem Zusammenhang die Gesamtheit aller enthaltenen Säuren und Alkohole verstanden wird. Die erfindungsgemäßen Polyester dieser Zusammensetzung weisen allgemein Säurezahlen von 1 bis 150 mg KOH/g, bevorzugt 1 bis 100 mg KOH/g, besonders bevorzugt 1-50 mg KOH/g, OH-Zahlen von 1 bis 200 mg KOH/g, bevorzugt 1-180 mg KOH/g, besonders bevorzugt 1-150 mg KOH/g auf.

Hergestellt werden die erfindungsgemäßen Polyester durch (halb)kontinuierliche oder diskontinuierliche Veresterung und Kondensation der Ausgangssäuren und -alkohole, in einstufiger oder zweistufiger Fahrweise. Die Synthese der erfindungsgemäßen Polyester erfolgt bevorzugt über eine Schmelzekondensation. Hierzu werden erfindungsgemäß die eingesetzten Di- oder Polycarbonsäuren und Diole zur Reaktion gebracht. Die Polykondensation erfolgt in der Schmelze bei Temperaturen zwischen 150 und 280 °C innerhalb von 3 bis 30 Stunden. Dabei wird zunächst ein Großteil der freiwerdenden Wassermenge bei Normaldruck abdestilliert. Im weiteren Verlauf wird das übrige Wasser sowie leicht flüchtige Diole abgespalten, bis das angestrebte Molekulargewicht erreicht ist. Gegebenenfalls kann dies durch verminderten Druck oder durch Durchleiten eines inerten Gasstroms erleichtert werden. Die Reaktion kann zusätzlich durch Zugabe eines Schleppmittels und/oder eines Katalysators vor oder während der Reaktion beschleunigt werden. Geeignete Schleppmittel sind beispielsweise Toluol und Xylole. Typische Katalysatoren sind Organotitan- oder Zinn-verbindungen wie Tetrabutyltitanat oder Dibutylzinnoxid. Denkbar sind auch Katalysatoren, die auf anderen Metallen wie z. B. Zink oder Antimon basieren sowie metallfreie Veresterungskatalysatoren. Weiterhin sind weitere Additive und Fahrhilfsmittel wie Antioxidantien oder Radikal- und Farbstabilisatoren möglich.

Da die erfindungsgemäßen Polyester bei 23 °C und 101325 Pa fließfähig sind, eignen sie sich daher in vorteilhafter Weise für eine ganze Reihe von Anwendungen. Insbesondere eignen sich die erfindungsgemäßen Polyester als haftungsverbessernder Zusatz.

Somit ist ein weiterer Gegenstand der vorliegenden Erfindung die Verwendung der erfindungsgemäßen Polyester als haftungsverbessernder Zusatz, insbesondere in Beschichtungen. Beschichtungen im Sinne der vorliegenden Erfindung sind unter anderem Farben, Lacke, Druckfarben und Drucklacke, allgemein flüssige, pastöse oder pulverförmige Produkte, die - auf einen Untergrund aufgetragen - eine Oberflächenbeschichtung mit schützenden, dekorativen oder anderen spezifischen Eigenschaften ergeben.

Es hat sich gezeigt, dass eine universelle Verträglichkeit der erfindungsgemäßen Polyester mit weiteren Bestandteilen von Beschichtungsstoffen und/oder Klebstoffen und/oder Dichtmassen besteht. Beispielsweise können die erfindungsgemäßen Polyester bei Einsatz als haftungsverbessernde Zusätze mit Polyacrylaten, Polyolefinen, gesättigten und/oder ungesättigten Polyestern und Copolyestern, Cellulosenitrat, Phenol- und/oder Melamin-Formaldehydharzen, Phenolharzen, Alkydharzen, acrylierten Polyestern, Polyamiden, Phenol- bzw. Keton-Formaldehydharzen, Ketonharzen, Polyurethanen Polyharnstoffen, Epoxidharzen, Polyvinylchlorid und seinen Derivaten, wie Co- und Terpolymere, Polyvinylalkohole, PVDF, Polyethern, Siliconharzen, Chlorkautschuk, Cyclokautschuk, Celluloseacetobutyrat gemischt werden.

Die erfindungsgemäßen Polyester werden beispielsweise mit den vorab genannten Polymeren in high- und very high-solid Formulierungen, wärmehärtbaren, strahlenhärtbaren, lufttrocknenden (oxidativ und physikalisch) Beschichtungsstoffen, Spachtel- und/oder Dichtmassen und Klebstoffen eingesetzt und sind als Modifizierungsharz geeignet für Primer, Füller, Basislacke, Einschichtdecklacke, Klarlacke, Klebstoffe, Dichtmassen, Straßenmarkierungsfarben, Korrosionsschutzanstrichen.

So können die erfindungsgemäßen Polyester beispielsweise in Korrosionsschutzlacken, in denen sie durch Radikalreaktionen korrosionsbeständige Schichten bilden, eingesetzt werden. Neben der Erhöhung der Haftung wird außerdem die Zwischenschichthaftung zu darüber liegenden und darunter liegenden Grenzschichten verbessert. Beschichtungsstoffe, die einen erfindungsgemäßen Zusatz enthalten, zeichnen sich außerdem durch einen hohen Glanz und einen guten Verlauf aus. In Spritzlacken wird zudem die Spritznebelaufnahme signifikant erhöht.

Weitere Gegenstand der vorliegenden Erfindung sind Formulierungen, enthaltend die erfindungsgemäßen Polyester. In den erfindungsgemäßen Formulierungen können die bereits vorab genannten Polymere enthalten sein. Darüber hinaus können die Formulierungen auch Hilfs- und Zusatzstoffe ausgewählt aus Inhibitoren, Wasser und/oder organischen Lösemitteln, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzausrüstungen, internen Trennmitteln, Füllstoffen und/oder Treibmitteln, enthalten.

In den genannten Formulierungen sind die erfindungsgemäßen Polyester als solches einsetzbar. Ferner sind weitere Modifikationen zur Hydrophobierung, Hydrophilierung und Funktionalisierung der erfindungsgemäßen Polyester möglich. Eine Hydrophobierung kann z. B. durch eine weitere Umsetzung mit Fettalkoholen oder Fettsäuren erfolgen. Eine Hydrophilierung bzw. Funktionalisierung kann z. B. durch eine weitere Umsetzung mit phosphor- oder borhaltigen Verbindungen (Phosphorsäure, Polyphosphorsäure, Borsäure) erzielt werden.

Das erfindungsgemäße ungesättigte Polyesterharz ist insbesondere geeignet, um in Formulierungen zur Herstellung von Lacken (Raumtemperaturhärtung bis Einbrennhärtung, IR-, UV- und Elektronenstrahlhärtung), Farben, Druckfarben, Beschichtungsstoffen im Allgemeinen, Laminierklebstoffen, Kaschierklebstoffen, allgemein in Klebstoffen und Dichtungsstoffen auf Basis von Polyestern, Melaminen, Epoxyden, Amiden, Polyethern, Nitrocellulosen, Celluloseacetobutyraten, Polyvinylbutyralen, Acrylaten, Polycarbonaten eingesetzt zu werden und diese Lacke in Bezug auf Viskosität, Haftung, Korrosion oder Glanz zu verbessern.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen. Nachfolgend wird die vorliegende Erfindung anhand von Beispielen näher erläutert. Alternative Ausführungsformen der vorliegenden Erfindung sind in analoger Weise erhältlich.

### Beispiele:

### Erfindungsgemäße Beispiele

### Beispiel 1 - Alkoxylierung von Tricyclodecandimethanol mit 4 mol Ethylenoxid

962,9 g (4,9 mol) Tricyclodecandimethanol wurden zur Senkung der Viskosität auf 80 °C erwärmt und mit 18,5 g (0,15 mol) KOH (45%ig) im Reaktor vorgelegt. Anschließend wurde mit Stickstoff inertisiert. Der Reaktor wurde evakuiert (-20 mbar) und das Gemisch auf eine Temperatur von 120 °C aufgeheizt, um das Wasser innerhalb von einer Stunde zu entfernen. Danach wurden 865 g (19,6 mol) Ethylenoxid innerhalb ca. einer Stunde angelagert. Nach einer Nachreaktionszeit von einer weiteren Stunde bei 120 °C wurde das Reaktionsprodukt auf 95 °C abgekühlt und 30 Minuten bei < 20 mbar zur Entfernung von nicht umgesetztem Ethylenoxid evakuiert. Anschließend wurde bei dieser Temperatur die Neutralisation mit Milchsäure (90%ig) durchgeführt. Die Milchsäure wurde zugesetzt, bis die Säurezahl zwischen 0,0 - 0,3 mg KOH/g lag. Anschließend wird das Produkt über einen 1 µm Filter filtriert.

### Beispiel 2 - Ungesättigtes Polyesterharz mit ethoxyliertem Tricyclodecandimethanol aus Beispiel 1

Adipin- und Fumarsäure (molares Verhältnis 1 : 1) wurden mit ethoxyliertem Tricyclodecandimethanol aus Beispiel 1 im molaren Verhältnis 1 : 1,5 bei 180 °C in Stickstoffatmosphäre zur Reaktion gebracht bis eine Säurezahl von 31 mg KOH/g und eine OH-Zahl von 119 mg KOH/g erreicht war. Hierzu wurde zunächst die Fumarsäure mit ethoxyliertem Tricyclodecandimethanol aus Beispiel 1 über eine Stunde verestert und dann die Adipinsäure zugesetzt.
Mn = 1000 g/mol
Mw = 1800 g/mol
Glasübergangstemperatur -38 °C
Viskosität bei 23 °C: 9500 mPas.

### Beispiel 3 - Alkoxylierung von Tricyclodecandimethanol mit 10 mol Ethylenoxid

962,9 g (4,9mol) Tricyclodecandimethanol wurden zur Senkung der Viskosität auf 80 °C erwärmt und mit 18,5 g (0,15 mol) KOH (45%ig) im Reaktor vorgelegt. Anschließend wurde mit Stickstoff inertisiert. Der Reaktor wurde evakuiert (-20 mbar) und das Gemisch auf eine Temperatur von 120 °C aufgeheizt, um das Wasser innerhalb von einer Stunde zu entfernen. Danach wurden 2156 g (49 mol) Ethylenoxid innerhalb ca. einer Stunde angelagert. Nach einer Nachreaktionszeit von einer weiteren Stunde bei 120 °C wurde das Reaktionsprodukt auf 95°C abgekühlt und 30 Minuten bei < 20 mbar zur Entfernung von nicht umgesetztem Ethylenoxid evakuiert. Anschließend wurde bei dieser Temperatur die Neutralisation mit Milchsäure (90%ig) durchgeführt. Die Milchsäure wurde zugesetzt, bis die Säurezahl zwischen 0,0 - 0,3 mg KOH/g lag. Anschließend wird das Produkt über einen 1 µm Filter filtriert.

### Beispiel 4 - Ungesättigtes Polyesterharz mit ethoxyliertem Tricyclodecandimethanol aus Beispiel 3

Adipin- und Fumarsäure (molares Verhältnis 1 : 1) wurden mit ethoxyliertem Tricyclodecandimethanol aus Beispiel 3 im molaren Verhältnis 1 : 1 bei 180 °C in Stickstoffatmosphäre zur Reaktion gebracht bis eine Säurezahl von 29 mg KOH/g und eine OH-Zahl von 45 mg KOH/g erreicht war. Hierzu wurde zunächst die Fumarsäure mit ethoxyliertem Tricyclodecandimethanol aus Beispiel 3 über eine Stunde verestert und dann die Adipinsäure zugesetzt.
Mn = 2900 g/mol
Mw = 10300 g/mol
Glasübergangstemperatur -48 °C
Viskosität bei 23 °C: 18400 mPas.

### Beispiel 5 - Alkoxylierung von Neopentylglykol mit 5 mol Propylenoxid

509,6 g (4,9 mol) Neopentylglykol wurden zur Senkung der Viskosität auf 80 °C erwärmt und mit 18,5 g (0,15 mol) KOH (45%ig) im Reaktor vorgelegt. Anschließend wurde mit Stickstoff inertisiert. Der Reaktor wurde evakuiert (-20 mbar) und das Gemisch auf eine Temperatur von 120 °C aufgeheizt, um das Wasser innerhalb von einer Stunde zu entfernen. Danach wurden 1423 g (24,5 mol) Propylenoxid innerhalb ca. einer Stunde angelagert. Nach einer Nachreaktionszeit von einer weiteren Stunde bei 120 °C wurde das Reaktionsprodukt auf 95 °C abgekühlt und 30 Minuten bei < 20 mbar zur Entfernung von nicht umgesetztem Propylenoxid evakuiert. Anschließend wurde bei dieser Temperatur die Neutralisation mit Milchsäure (90%ig) durchgeführt. Die Milchsäure wurde zugesetzt, bis die Säurezahl zwischen 0,0 - 0,3 mg KOH/g lag. Anschließend wird über einen 1 µm Filter filtriert.

### Beispiel 6 - Ungesättigtes Polyesterharz mit propoxyliertem Neopentylglykol aus Beispiel 5

Adipin- und Fumarsäure (molares Verhältnis 1 : 1) wurden mit propoxyliertem Neopentylglykol aus Beispiel 5 im molaren Verhältnis 1 : 1,1 bei 180 °C in Stickstoffatmosphäre zur Reaktion gebracht bis eine Säurezahl von 33 mg KOH/g und eine OH-Zahl von 52 mg KOH/g erreicht war. Hierzu wurde zunächst die Fumarsäure mit propoxyliertem Neopentylglykol aus Beispiel 5 über eine Stunde verestert und dann die Adipinsäure zugesetzt.
Mn = 2200 g/mol
Mw = 5400 g/mol
Glasübergangstemperatur -54 °C
Viskosität bei 23 °C: 4900 mPas.

### Beispiel 7 - Ungesättigtes Polyesterharz mit ethoxyliertem Tricyclodecandimethanol aus Beispiel 1 unter Verwendung einer Monocarbonsäure

Fumar- und Laurinsäure (molares Verhältnis 4 : 1) wurden mit ethoxyliertem Tricyclodecandimethanol aus Beispiel 1 im molaren Verhältnis 1 : 1 bei 180 °C in Stickstoffatmosphäre zur Reaktion gebracht bis eine Säurezahl von 33 mg KOH/g und eine OH-Zahl von 45 mg KOH/g erreicht war.
Mn = 1790 g/mol
Mw = 5230 g/mol
Glasübergangstemperatur -72 °C
Viskosität bei 23 °C: 6500 mPas.

### Beispiel 8 - Ungesättigtes Polyesterharz mit ethoxyliertem Tricyclodecandimethanol aus Beispiel 1 unter Verwendung von Polyphosphorsäure

Fumarsäure, Adipinsäure und Polyphosphorsäure 85 % w/w (molares Verhältnis 1 : 0,94 : 0,06) wurden mit ethoxyliertem Tricyclodecandimethanol aus Beispiel 1 im molaren Verhältnis 1 : 1 bei 180 °C in Stickstoffatmosphäre zur Reaktion gebracht bis eine Säurezahl von 27 mg KOH/g und eine OH-Zahl von 52 mg KOH/g erreicht war. Hierzu wurde zunächst die Fumarsäure mit ethoxyliertem Tricyclodecandimethanol aus Beispiel 1 über eine Stunde verestert und dann die Polyphosphorsäure zugesetzt. Nach einer weiteren Stunde wurde die Adipinsäure hinzugefügt.
Mn = 1900 g/mol
Mw = 5000 g/mol
Glasübergangstemperatur -21 °C
Viskosität bei 23 °C: 19500 mPas.

### Beispiel 9 - Alkoxylierung von Tricyclodecandimethanol mit 5 mol Ethylenoxid

2802,3 g (14,28 mol) Tricyclodecandimethanol wurden zur Senkung der Viskosität auf 80 °C erwärmt und mit 24,0 g (0,43 mol) KOH (fest) im Reaktor vorgelegt. Anschließend wurde der Reaktorinnenraum mit Stickstoff inertisiert. Der Reaktor wurde evakuiert (-20 mbar) und das Gemisch auf eine Temperatur von 115 °C aufgeheizt. Danach wurden 3242 g (73,5 mol) Ethylenoxid innerhalb ca. einer Stunde angelagert. Nach einer Nachreaktionszeit von einer weiteren Stunde bei 115 °C wurde das Reaktionsprodukt auf 95 °C abgekühlt und 30 Minuten bei < 20 mbar zur Entfernung von nicht umgesetztem Ethylenoxid evakuiert. Anschließend wurde bei dieser Temperatur das Reaktionsprodukt mit wässeriger Phosphorsäure (30%ig) neutralisiert und Wasser bei 115 °C und 20 mbar destillativ entfernt. Das trocken destillierte Produkt wurde anschließend über einen 1 µm Filter filtriert.

### Beispiel 10 - Alkoxylierung von Neopentylglykol mit 5 mol Ethylenoxid

227,6 g (2,18 mol) Neopentylglykol und 1,2 g (0,02 mol) KOH (fest) wurden im Reaktor vorgelegt. Anschließend wurde der Reaktorinnenraum mit Stickstoff inertisiert. Der Reaktor wurde evakuiert (-20 mbar) und das Gemisch durch Erwärmen auf eine Temperatur von 130 °C aufgeschmolzen. Danach wurden 481 g (10,9 mol) Ethylenoxid innerhalb ca. zwei Stunden angelagert. Nach einer Nachreaktionszeit von 1,5 Stunden bei 115 °C wurde das Reaktionsprodukt auf 95 °C abgekühlt und 30 Minuten bei < 20 mbar zur Entfernung von nicht umgesetztem Ethylenoxid evakuiert. Anschließend wurde bei dieser Temperatur das Reaktionsprodukt mit wässeriger Phosphorsäure (30%ig) neutralisiert und Wasser bei 115 °C und 20 mbar destillativ entfernt. Das trocken destillierte Produkt wurde anschließend über einen 1 µm Filter filtriert.

### Beispiel 11 - Ungesättigtes Polyesterharz mit ethoxyliertem Tricyclodecandimethanol aus Beispiel 9

Adipin-, Mesacon- und Fumarsäure (molares Verhältnis 5 : 1 : 4) wurden mit ethoxyliertem Tricyclodecandimethanol aus Beispiel 9 im molaren Verhältnis 1 : 1,1 bei 180 °C in Stickstoffatmosphäre zur Reaktion gebracht bis eine Säurezahl von 29 mg KOH/g und eine OH-Zahl von 58 mg KOH/g erreicht war. Hierzu wurde zunächst die Fumarsäure und Mesaconsäure mit ethoxyliertem Tricyclodecandimethanol aus Beispiel 9 über eine Stunde verestert und dann die Adipinsäure zugesetzt.
Mn = 2000 g/mol
Mw = 5100 g/mol
Glasübergangstemperatur -41 °C
Viskosität bei 23 °C: 27000 mPas.

### Beispiel 12 - Ungesättigtes Polyesterharz mit ethoxyliertem Tricyclodecandimethanol aus Beispiel 9

Adipin-, Citracon- und Fumarsäure (molares Verhältnis 5 : 1 : 4) wurden mit ethoxyliertem Tricyclodecandimethanol aus Beispiel 9 im molaren Verhältnis 1 : 1,1 bei 180 °C in Stickstoffatmosphäre zur Reaktion gebracht bis eine Säurezahl von 29 mg KOH/g und eine OH-Zahl von 58 mg KOH/g erreicht war. Hierzu wurde zunächst die Fumarsäure und Citraconsäure mit ethoxyliertem Tricyclodecandimethanol aus Beispiel 9 über eine Stunde verestert und dann die Adipinsäure zugesetzt.
Mn = 1900 g/mol
Mw = 4600 g/mol
Glasübergangstemperatur -41 °C
Viskosität bei 23 °C: 25000 mPas.

### Beispiel 13 - Ungesättigtes Polyesterharz mit ethoxyliertem Neopentylglykol aus Beispiel 10

Adipin-, Malein- und Fumarsäure (molares Verhältnis 2 : 1 : 1) wurden mit ethoxyliertem Neopentylglykol aus Beispiel 10 im molaren Verhältnis 1 : 1,4 bei 180 °C in Stickstoffatmosphäre zur Reaktion gebracht bis eine Säurezahl von 29 mg KOH/g und eine OH-Zahl von 124 mg KOH/g erreicht war. Hierzu wurde zunächst die Fumarsäure und Maleinsäure mit ethoxyliertem Neopentylglykol aus Beispiel 10 über eine Stunde verestert und dann die Adipinsäure zugesetzt.
Mn = 1200 g/mol
Mw = 2400 g/mol
Glasübergangstemperatur -61 °C
Viskosität bei 23 °C: 1000 mPas.

### Beispiel 14 - Ungesättigtes Polyesterharz mit ethoxyliertem Neopentylglykol aus Beispiel 10

Adipin-, Itacon- und Fumarsäure (molares Verhältnis 10 : 1 : 9) wurden mit ethoxyliertem Neopentylglykol aus Beispiel 10 im molaren Verhältnis 1 : 1,4 bei 180 °C in Stickstoffatmosphäre zur Reaktion gebracht bis eine Säurezahl von 30 mg KOH/g und eine OH-Zahl von 124 mg KOH/g erreicht war. Hierzu wurde zunächst die Fumarsäure und Itaconsäure mit ethoxyliertem Neopentylglykol aus Beispiel 10 über eine Stunde verestert und dann die Adipinsäure zugesetzt.
Mn = 1200 g/mol
Mw = 2200 g/mol
Glasübergangstemperatur -62 °C
Viskosität bei 23 °C: 930 mPas.

### Beispiel 15 - Ungesättigtes Polyesterharz mit ethoxyliertem Neopentylglykol aus Beispiel 10

Adipinsäure, Dodecandisäure, Phthalsäureanhydrid, Terephthalsäure, Isononansäure und Fumarsäure (molares Verhältnis 10 : 3 : 1 : 1 : 1 : 4) wurden mit ethoxyliertem Neopentylglykol aus Beispiel 10 im molaren Verhältnis 1 : 1,5 bei 180 °C in Stickstoffatmosphäre zur Reaktion gebracht bis eine Säurezahl von 24 mg KOH/g und eine OH-Zahl von 115 mg KOH/g erreicht war. Hierzu wurde zunächst die Fumarsäure und Terephthalsäure mit ethoxyliertem Neopentylglykol aus Beispiel 10 über eine Stunde verestert und dann die Adipinsäure, Dodecandisäure, Isononansäure und das Phthalsäureanhydrid zugesetzt.
Mn = 1300 g/mol
Mw = 2700 g/mol
Glasübergangstemperatur -63 °C
Viskosität bei 23 °C: 960 mPas.

### Beispiel 16 - Ungesättigtes Polyesterharz mit ethoxyliertem Neopentylglykol aus Beispiel 10

Bernsteinsäureanhydrid, Azelainsäure, Isophthalsäure, Hexahydrophthalsäureanhydrid, Methylhexahydrophthalsäureanhydrid und Fumarsäure (molares Verhältnis 6 : 6,7 : 1 : 1,1 : 1,2 : 4) wurden mit ethoxyliertem Neopentylglykol aus Beispiel 10 im molaren Verhältnis 1 : 1,5 bei 180 °C in Stickstoffatmosphäre zur Reaktion gebracht bis eine Säurezahl von 24 mg KOH/g und eine OH-Zahl von 124 mg KOH/g erreicht war. Hierzu wurde zunächst die Fumarsäure und Isophthalsäure mit ethoxyliertem Neopentylglykol aus Beispiel 10 über eine Stunde verestert und dann die Azelainsäure und das Bernsteinsäure-Hexahydrophthalsäure- und Methylhexahydrophthalsäureanhydrid zugesetzt.
Mn = 1200 g/mol
Mw = 2400 g/mol
Glasübergangstemperatur -62 °C
Viskosität bei 23 °C: 1000 mPas.

### Beispiel 17 - Ungesättigtes Polyesterharz mit ethoxyliertem Neopentylglykol aus Beispiel 10

Adipinsäure, Sebazinsäure, Trimellitsäureanhydrid, Polyphosphorsäure und Fumarsäure (molares Verhältnis 8 : 6 : 1 : 1 : 4) wurden mit ethoxyliertem Neopentylglykol aus Beispiel 10 im molaren Verhältnis 1 : 1,6 bei 180 °C in Stickstoffatmosphäre zur Reaktion gebracht bis eine Säurezahl von 25 mg KOH/g und eine OH-Zahl von 129 mg KOH/g erreicht war. Hierzu wurde zunächst die Fumarsäure und mit ethoxyliertem Neopentylglykol aus Beispiel 10 über eine Stunde verestert und dann die Adipinsäure, Sebazinsäure, Polyphosporsäure und das Trimellitsäureanhydrid zugesetzt.
Mn = 1300 g/mol
Mw = 2600 g/mol
Glasübergangstemperatur -64 °C
Viskosität bei 23 °C: 990 mPas.

### Beispiel 18 - Ungesättigtes Polyesterharz mit ethoxyliertem Neopentylglykol aus Beispiel 10

Adipinsäure, Tetrahydrophthalsäureanhydrid, Dimethylphthalat, Phosphorsäure und Fumarsäure (molares Verhältnis 10 : 4 : 1 : 1 : 4) wurden mit ethoxyliertem Neopentylglykol aus Beispiel 10 im molaren Verhältnis 1 : 1,5 bei 180 °C in Stickstoffatmosphäre zur Reaktion gebracht bis eine Säurezahl von 24 mg KOH/g und eine OH-Zahl von 132 mg KOH/g erreicht war. Hierzu wurde zunächst die Fumarsäure und mit ethoxyliertem Neopentylglykol aus Beispiel 10 über eine Stunde verestert und dann die Adipinsäure, das Tetrahydrophthalsäureanhydrid, Dimethylphthalat und die Phosphorsäure zugesetzt.
Mn = 930 g/mol
Mw = 1900 g/mol
Glasübergangstemperatur -63 °C
Viskosität bei 23 °C: 740 mPas.

### Beispiel 19 - Ungesättigtes Polyesterharz mit ethoxyliertem Neopentylglykol aus Beispiel 10

Adipinsäure, Pyromellitsäuredianhydrid, Äpfelsäure, Laurinsäure und Fumarsäure (molares Verhältnis 10 : 1 : 4 : 1 : 4) wurden mit ethoxyliertem Neopentylglykol aus Beispiel 10 im molaren Verhältnis 1 : 1,3 bei 180 °C in Stickstoffatmosphäre zur Reaktion gebracht bis eine Säurezahl von 26 mg KOH/g und eine OH-Zahl von 101 mg KOH/g erreicht war. Hierzu wurde zunächst die Fumarsäure und mit ethoxyliertem Neopentylglycol aus Beispiel 10 über eine Stunde verestert und dann die Adipinsäure, Pyromellitsäuredianhydrid, Äpfelsäure, und Laurinsäure zugesetzt.
Mn = 1700 g/mol
Mw = 4100 g/mol
Glasübergangstemperatur -58 °C
Viskosität bei 23 °C: 2400 mPas.

### Beispiel 20 - Ungesättigtes Polyesterharz mit ethoxyliertem Neopentylglykol aus Beispiel 10

Adipin- und Fumarsäure (molares Verhältnis 1 : 1) wurden mit ethoxyliertem Neopentylglykol aus Beispiel 10 im molaren Verhältnis 1 : 1,4 bei 180 °C in Stickstoffatmosphäre zur Reaktion gebracht bis eine Säurezahl von 20 mg KOH/g und eine OH-Zahl von 117 mg KOH/g erreicht war. Hierzu wurde zunächst die Fumarsäure mit ethoxyliertem Neopentylglykol aus Beispiel 10 über eine Stunde verestert und dann die Adipinsäure zugesetzt.
Mn = 1400 g/mol
Mw = 3100 g/mol
Glasübergangstemperatur -61 °C
Viskosität bei 23 °C: 1200 mPas.

### Beispiel 21 - Ungesättigtes Polyesterharz mit ethoxyliertem Neopentylglykol aus Beispiel 10

Adipin- und Fumarsäure (molares Verhältnis 3 : 1) wurden mit ethoxyliertem Neopentylglykol aus Beispiel 10 im molaren Verhältnis 1 : 1,2 bei 180 °C in Stickstoffatmosphäre zur Reaktion gebracht bis eine Säurezahl von 19 mg KOH/g und eine OH-Zahl von 73 mg KOH/g erreicht war. Hierzu wurde zunächst die Fumarsäure mit ethoxyliertem Neopentylglykol aus Beispiel 10 über eine Stunde verestert und dann die Adipinsäure zugesetzt.
Mn = 2000 g/mol
Mw = 4400 g/mol
Glasübergangstemperatur -60 °C
Viskosität bei 23 °C: 2000 mPas.

### Beispiel 22 - Ungesättigtes Polyesterharz mit ethoxyliertem Tricyclodecandimethanol aus Beispiel 9

Adipin- und Fumarsäure (molares Verhältnis 3 : 1) wurden mit ethoxyliertem Tricyclodecandimethanol aus Beispiel 9 im molaren Verhältnis 1 : 1,2 bei 180 °C in Stickstoffatmosphäre zur Reaktion gebracht bis eine Säurezahl von 20 mg KOH/g und eine OH-Zahl von 61 mg KOH/g erreicht war. Hierzu wurde zunächst die Fumarsäure mit ethoxyliertem Tricyclodecandimethanol aus Beispiel 9 über eine Stunde verestert und dann die Adipinsäure zugesetzt.
Mn = 2000 g/mol
Mw = 4800 g/mol
Glasübergangstemperatur -44 °C
Viskosität bei 23 °C: 18000 mPas.

### Nicht erfindungsgemäße Beispiele

### Beispiel 23 - Ungesättigtes Polyesterharz mit Tricyclodecandimethanol

Adipin- und Fumarsäure (molares Verhältnis 1 : 1) wurden mit Tricyclodecandimethanol im Verhältnis 1 : 1,1 bei 180 °C in Stickstoffatmosphäre zur Reaktion gebracht bis eine Säurezahl von 26 mg KOH/g und eine OH-Zahl von 37 mg KOH/g erreicht war. Hierzu wurde zunächst die Fumarsäure mit Tricyclodecandimethanol über eine Stunde verestert und dann die Adipinsäure zugesetzt.
Mn = 1800 g/mol
Mw = 4300 g/mol
Glasübergangstemperatur 12 °C
fest bei 23 °C.

### Beispiel 24 - Ungesättigtes Polyesterharz mit Neopentylglykol

Adipinsäure und Fumarsäure (molares Verhältnis 1 : 1) wurden mit Neopentylglykol im molaren Verhältnis 1 : 1 bei 180 °C in Stickstoffatmosphäre zur Reaktion gebracht, bis eine Säurezahl von 31 mg KOH/g und eine OH-Zahl von 39 mg KOH/g erreicht war. Hierzu wurde zunächst die Fumarsäure mit Neopentylglykol über eine Stunde verestert und dann die Adipinsäure zugesetzt.
Mn = 2600 g/mol
Mw = 6100 g/mol
Glasübergangstemperatur -29 °C
fest bei 23 °C.

### Beispiel 25 - Ungesättigtes Polyesterharz mit Dicidol

Adipinsäure und Maleinsäure (molares Verhältnis 1 : 1) wurden mit Dicidol im Verhältnis 1 : 1,05 bei 180 °C in Stickstoffatmosphäre zur Reaktion gebracht bis eine Säurezahl von 26 mg KOH/g und eine OH-Zahl von 37 mg KOH/g erreicht war. Hierzu wurde zunächst die Maleinsäure mit Dicidol über eine Stunde verestert und dann die Adipinsäure zugesetzt.
Mn = 1800 g/mol
Mw = 4300 g/mol,
Glasübergangstemperatur 12 °C
Fest bei 23 °C

### Anwendungsbeispiele

Anwendung im Korrosionsschutzlack auf Basis eines Kurzölalkyds
In einem Korrosionsschutzlack auf Basis eines Kurzölalkyds wurden Teile des Hauptbindemittels durch das erfindungsgemäße ungesättigte Polyesterharz in Zusammensetzung KA2 sowie durch ein nicht erfindungsgemäßes ungesättigtes Polyesterharz in Zusammensetzung KA3 ersetzt. KA1 beschreibt die Zusammensetzung der Nullprobe.

| | | KA1 | KA2 | KA3 |
|---|---|---|---|---|
| Worleekyd 3001 | Kurzölalkyd; 75%ig | 33,1 | 30,0 | 30,0 |
| | Xylol | 12,3 | 13,1 | 11,6 |
| | Sikkativ Ca 10 | 0,2 | 0,2 | 0,2 |
| | Sikkativ Co 6 | 0,2 | 0,2 | 0,2 |
| Bentone 38 | Bentone Quellung, 10%ig | 3,1 | 3,1 | 3,1 |
| Heucophos ZP10 | Zinkphosphat | 5,2 | 5,2 | 5,2 |
| Kronos 2190 | Titandioxid | 12,4 | 12,4 | 12,4 |
| Printex 25 | Ruß | 0,0 | 0,0 | 0,0 |
| Finntalc M 15 SQ | Talkum | 7,7 | 7,7 | 7,7 |
| Millicarb OG | Calciumcarbonat | 16,6 | 16,6 | 16,6 |
| Microdol Extra KN | Dolomit | 10,5 | 10,5 | 10,5 |
| Aus Beispiel 6 | Erfindungsgemäßes Polyesterharz | 0,0 | 2,3 | 0,0 |
| Aus Beispiel 23 | Nicht erfindungsgemäßes Polyesterharz | 0,0 | 0,0 | 3,8 |
| | Methoxypropanol | 2,1 | 2,1 | 2,1 |
| Ascinin AntiSkin 0444 | Hautverhinderungsmittel | 0,4 | 0,4 | 0,4 |

Die Zahlenangaben beziehen sich auf Gew.-%

### Anwendungsbeispiel 1

Die hohe Viskosität der Rezeptur KA1 mit 1040 mPa*s und KA3 mit 930 mPa*s, gemessen mit einem Anton Paar Rotationsviskosimeter M102 und der Messgeometrie CP50/2 bei 23 °C und einer Scherrate von 1/100s, wurde durch Zugabe des erfindungsgemäßen ungesättigten Polyesterharzes aus Beispiel 6 in Rezeptur KA2 auf 630 mPa*s gesenkt. Dadurch konnte der nichtflüchtige Anteil in der Beschichtung bei vergleichbarer Viskosität erhöht werden.

### Anwendungsbeispiel 2

Der geringe Glanzgrad der Rezeptur KA1 mit 57 GE > 60° und KA3 mit 42 GE > 60°, gemessen nach DIN EN ISO 2813 auf einer Glasplatte wurde durch Zugabe des erfindungsgemäßen ungesättigten Polyesterharzes aus Beispiel 6 auf 80 GE > 60° verbessert.

### Anwendungsbeispiel 3

Die Haftung der Rezeptur KA1 mit Gitterschnitt-Kennwert 3 und KA3 mit Gitterschnitt-Kennwert 2, gemessen nach DIN EN ISO 2409, geschnitten mit einem Einschneidengerät; 1 mm Schnittabstand; abgerissen mit Tesa® Klebeband Nr. 4651, wurde durch Zugabe des erfindungsgemäßen ungesättigten Polyesterharzes aus Beispiel 6 auf Gitterschnitt-Kennwert 1 verbessert.
Untergrund: Stahlblech
Trockenschichtdicke: 55 µm
Alterung: 6 Wochen

### Anwendungsbeispiel 4

Bei einem Salzsprühtest nach DIN EN ISO 9227 (40 °C; 0,5 % NaCl; pH 6,5 - 7,2; Durchlauf gemessen auf einer 80 cm² Fläche: 2 ml/h; Aufstellwinkel der Prüflinge: 20°) konnte das Ergebnis mit entstandenen mittelgroßen Blasen bei den Rezepturen KA1 und KA3 durch Zugabe des erfindungsgemäßen ungesättigten Polyesterharzes aus Beispiel 6 bei der Rezeptur KA2 auf ein blasenfreies Ergebnis verbessert werden.

### Anwendung in einem 2K PUR Einschichtlack auf Basis eines polyisocyanatvernetzenden Acrylatharzes

In einem 2K PUR Einschichtlack auf Basis eines polyisocyanatvernetzenden Acrylatharzes wurden Teile des Hauptbindemittels durch das erfindungsgemäße ungesättigte Polyesterharz in Zusammensetzung PU2 sowie durch ein nicht erfindungsgemäßes ungesättigtes Polyesterharz in Zusammensetzung PU3 ersetzt. PU1 beschreibt die Zusammensetzung der Nullprobe.

| | | PU1 | PU2 | PU3 |
|---|---|---|---|---|
| Synthalat A085 | Acrylatharz | 37,6 | 34,2 | 34,2 |
| Kronos 2310 | Titandioxid | 18,0 | 18,0 | 18,0 |
| Blancfixe micro | Bariumsulfat | 15,0 | 15,0 | 15,0 |
| Talkum IT extra | Talkum | 7,0 | 7,0 | 7,0 |
| | Dispergierhilfe Ca 4 | 1,0 | 1,0 | 1,0 |
| Bentone 38 | Bentone Quellung 10%ig | 4,0 | 4,0 | 4,0 |
| | Xylol | 5,0 | 5,0 | 5,0 |
| | Solventnaphta | 3,0 | 4,3 | 3,0 |
| Aus Beispiel 4 bzw.6 | Erfindungsgemäßes Polyesterharz | 0,0 | 2,1 | 0,0 |
| Aus Beispiel 25 | Nichterfindungsgemäßes Polyesterharz; 60%ig in Xylol | 0,0 | 0,0 | 3,4 |
| | Methoxypropylacetat | 8,0 | 8,0 | 8,0 |
| Vestanat 2640 MX | Polyisocyanat | 8,0 | 8,0 | 8,0 |

Die Zahlenangaben beziehen sich auf Gew.-%

### Anwendungsbeispiel 5

Die hohe Viskosität der Rezeptur PU3 mit 715 mPa*s, gemessen mit einem Anton Paar Rotationsviskosimeter M102 und der Messgeometrie CP50/2 bei 23 °C und einer Scherrate von 1/100s, wurde durch Zugabe des erfindungsgemäßen ungesättigten Polyesterharzes aus Beispiel 4 in Rezeptur PU2 auf 330 mPa*s gesenkt. Dadurch konnte der nichtflüchtige Anteil in der Beschichtung bei vergleichbarer Viskosität erhöht werden.

### Anwendungsbeispiel 6

Der geringe Glanzgrad der Rezeptur PU1 mit 67 GE > 60° und PU3 mit 16 GE > 60°, gemessen nach DIN EN ISO 2813 auf einer Glasplatte wurde durch Zugabe des erfindungsgemäßen ungesättigten Polyesterharzes aus Beispiel 4 in Rezeptur PU2 auf 74 GE > 60° verbessert.

### Anwendungsbeispiel 7

Die Haftung der Rezeptur PU1 mit Gitterschnitt-Kennwert 4 und PU3 mit Gitterschnitt-Kennwert 4, gemessen nach DIN EN ISO 2409, geschnitten mit einem Einschneidengerät; 1 mm Schnittabstand; abgerissen mit Tesa® Klebeband Nr. 4651, wurde durch Zugabe des erfindungsgemäßen ungesättigten Polyesterharzes aus Beispiel 6 auf Gitterschnitt-Kennwert 1 verbessert.
Untergrund: Sendzimirverzinktes Stahlblech Trockenschichtdicke: 50 µm
Alterung: 6 Wochen

### Anwendungsbeispiel 8

Die Beständigkeit gegenüber Handcreme verbesserte sich gegenüber der Rezeptur PU1 (leichtes Anlösen und Aufweichen der Beschichtung) durch Zugabe des erfindungsgemäßen ungesättigten Polyesterharzes aus Beispiel 4 bei Rezeptur PU2 zu einer unangegriffenen Beschichtungsoberfläche.
Creme: Nivea Soft & Intensive
Belastungsdauer: 48 h bei RT

### Anwendung in einem 1K Einbrennlack auf Basis eines melaminvernetzenden Polyesterharzes

In einem 1K Einbrennlack auf Basis eines melaminvernetzenden Polyesterharzes wurden Teile des Hauptbindemittels durch das erfindungsgemäße ungesättigte Polyesterharz in Zusammensetzung EB2 sowie durch ein nicht erfindungsgemäßes ungesättigtes Polyesterharz in Zusammensetzung EB3 ersetzt. EB1 beschreibt die Zusammensetzung der Nullprobe.

| | | EB1 | EB2 | EB3 |
|---|---|---|---|---|
| Dynapol LH 831/24 | Polyesterharz | 41,05 | 38,85 | 38,85 |
| Aerosil 200 | Pyrogene Kieselsäure | 0,32 | 0,32 | 0,32 |
| Kronos 2310 | Titandioxid | 31,73 | 31,73 | 31,73 |
| | Solvent Naphta 100 | 3,18 | 3,18 | 3,18 |
| Cymel 303 | Melaminharz | 8,06 | 8,06 | 8,06 |
| Nacure 2500 | Katalysator | 0,42 | 0,42 | 0,42 |
| Tego Flow 370 | Verlaufsadditiv | 1,06 | 1,06 | 1,06 |
| | Butylglykol | 4,24 | 5,27 | 4,24 |
| Aus Beispiel 20 bzw. 21 | Erfindungsgemäßes Polyesterharz | 0,0 | 1,54 | 0,0 |
| Aus Beispiel 25 | Nichterfindungsgemäßes Polyesterharz; 60%ig in Xylol | 0,0 | 0,0 | 2,57 |
| | Solventnaphta 100 | 5,31 | 5,31 | 5,31 |
| | Solventnaphta 150 | 4,24 | 4,24 | 4,24 |

Die Zahlenangaben beziehen sich auf Gew.-%

### Anwendungsbeispiel 9

Die hohe Viskosität der Rezeptur EB3 mit 580 mPa*s, gemessen mit einem Anton Paar Rotationsviskosimeter M102 und der Messgeometrie CP50/2 bei 23 °C und einer Scherrate von 1/100s, wurde durch Zugabe des erfindungsgemäßen ungesättigten Polyesterharzes aus Beispiel 20 in Rezeptur EB2 auf 366 mPa*s gesenkt. Dadurch konnte der nichtflüchtige Anteil in der Beschichtung bei vergleichbarer Viskosität erhöht werden.

### Anwendungsbeispiel 10

Die Haftung der Rezeptur EB1 mit Gitterschnitt-Kennwert 4 und EB3 mit Gitterschnitt-Kennwert 4, gemessen nach DIN EN ISO 2409, geschnitten mit einem Einschneidegerät; 1 mm Schnittabstand; abgerissen mit Tesa® Klebeband Nr. 4651, wurde durch Zugabe des erfindungsgemäßen ungesättigten Polyesterharzes aus Beispiel 21 in Rezeptur EB2 auf Gitterschnitt-Kennwert 1 verbessert.
Untergrund: Sendzimirverzinktes Stahlblech Trockenschichtdicke: 37 µm
Alterung: 6 Wochen

### Anwendungsbeispiel 11

Die Haftung der Rezeptur EB1 mit Gitterschnitt-Kennwert 4, gemessen nach DIN EN ISO 2409, geschnitten mit einem Einschneidegerät; 1 mm Schnittabstand; abgerissen mit Tesa® Klebeband Nr. 4651, wurde durch Zugabe des erfindungsgemäßen ungesättigten Polyesterharzes aus Beispiel 21 in Rezeptur EB2 auf Gitterschnitt-Kennwert 1 verbessert.
Untergrund: Glasplatte; Trockenschichtdicke: 37 µm
Alterung: 24 Stunden

### Anwendung in einem 2K EP Einschichtlack auf Basis eines aminvernetzenden Epoxidharzes

In einem 2K EP Einschichtlack auf Basis eines aminvernetzenden Epoxidharzes wurden Teile des Hauptbindemittels durch das erfindungsgemäße ungesättigte Polyesterharz in Zusammensetzung EP2 sowie durch ein nicht erfindungsgemäßes ungesättigtes Polyesterharz in Zusammensetzung EP3 ersetzt. EP1 beschreibt die Zusammensetzung der Nullprobe.

| | | EP1 | EP2 | EP3 |
|---|---|---|---|---|
| Epikote 834-X-80 | Epoxidharz | 35,24 | 31,72 | 31,72 |
| Spezialschwarz 250 | Ruß | 0,85 | 0,85 | 0,85 |
| Heucophos ZPA | Zinkphosphat | 4,25 | 4,25 | 4,25 |
| Finntalc M20SL | Talkum | 10,19 | 10,19 | 10,19 |
| Kronos 2310 | Titandioxid | 15,29 | 15,29 | 15,29 |
| Blancfixe micro | Bariumsulfat | 11,46 | 11,46 | 11,46 |
| | Xylol | 7,64 | 8,34 | 6,46 |
| Aus Beispiel 20 bzw.22 | Erfindungsgemäßes Polyesterharz | 0,00 | 2,82 | 0,00 |
| Aus Beispiel 25 | Nichterfindungsgemäßes Polyesterharz; 60%ig in Xylol | 0,00 | 0,00 | 4,70 |
| Epikure 3155 | Aminischer Härter | 15,07 | 15,07 | 15,07 |

Die Zahlenangaben beziehen sich auf Gew.-%

### Anwendungsbeispiel 12

Die hohe Viskosität der Rezeptur EP1 mit 1170 mPa*s und der Rezeptur EP3 mit 1750 mPa*s, gemessen mit einem Anton Paar Rotationsviskosimeter M102 und der Messgeometrie CP50/2 bei 23 °C und einer Scherrate von 1/100s, wurde durch Zugabe des erfindungsgemäßen ungesättigten Polyesterharzes aus Beispiel 20 n Rezeptur EP2 auf 744 mPa*s gesenkt. Dadurch konnte der nichtflüchtige Anteil in der Beschichtung bei vergleichbarer Viskosität erhöht werden.

### Anwendungsbeispiel 13

Der Glanzgrad der Rezeptur EP1 mit 93 GE > 85°, gemessen nach DIN EN ISO 2813 auf einer Glasplatte, wurde durch Zugabe des erfindungsgemäßen ungesättigten Polyesterharzes aus Beispiel 22 in Rezeptur EP2 auf 99 GE > 85° verbessert.

### Zusammenfassung:

Die vorliegende Erfindung betrifft Polyester auf Basis von Di- oder Polycarbonsäuren und Diolen, wobei die Polyester mindestens eine ungesättigte Di- oder Polycarbonsäure und mindestens ein alkoxyliertes Diol enthalten, Verfahren zu deren Herstellung und deren Verwendung.

## Patentansprüche

1. Polyester auf Basis von Di- oder Polycarbonsäuren und Diolen, **dadurch gekennzeichnet, dass** sie mindestens eine ungesättigte Di- oder Polycarbonsäure und mindestens ein alkoxyliertes Diol enthalten, wobei als alkoxyliertes Diol Verbindungen der allgemeinen Formel (I)
R-O(CH₂CH₂O)ₐ(CH₂CHCH₃O)_{b}-H (I)
eingesetzt werden, mit
R = Tricyclodecandimethanol, 1,2-Propandiol, Cyclohexandimethanol und Neopentylglycol,
a = 0 bis 20, bevorzugt 5 bis 12, und/oder
b = 0 bis 20, bevorzugt 5 bis 12,
mit der Maßgabe, dass a+b ≥ 1 ist.

2. Polyester gemäß Anspruch 1, **dadurch gekennzeichnet, dass** als ungesättigte Di- oder Polycarbonsäure Citracon-, Fumar-, Itacon-, Malein- und/oder Mesaconsäure eingesetzt wird.

3. Polyester gemäß Anspruch 1 oder 2, **dadurch gekennzeichnet, dass** die Diole mit Ethylenoxid und/oder Propylenoxid alkoxyliert sind.

4. Polyester gemäß einem oder mehreren der Ansprüche 1 bis 3, **dadurch gekennzeichnet, dass** das Mol-Verhältnis des alkoxylierten Diols zu den Di-oder Polycarbonsäuren 0,5 - 2 : 1 beträgt.

5. Polyester gemäß einem oder mehreren der Ansprüche 1 bis 4, **dadurch gekennzeichnet, dass** die Polyester eine Säurezahl, bestimmt nach DIN EN ISO 2114, zwischen 1 und 150 mg KOH/g aufweisen.

6. Polyester gemäß einem oder mehreren der Ansprüche 1 bis 5, **dadurch gekennzeichnet, dass** die Polyester eine OH-Zahl, bestimmt nach DIN 53240-2, zwischen 1 und 200 mg KOH/g aufweisen.

7. Polyester gemäß einem oder mehreren der Ansprüche 1 bis 6, **dadurch gekennzeichnet, dass** als alkoxyliertes Diol das ethoxylierte oder propoxylierte Tricyclodecandimethanol der isomeren Verbindungen 3,8-Bis(hydroxymethyl)tricyclo[5.2.10^{2,6}]decan, 4,8-Bis(hydroxymethyl)tricyclo [5.2.10^{2,6}]decan und 5,8-Bis(hydroxymethyl)tricyclo[5.2.10^{2,6}]decan und als Di- oder Polycarbonsäuren ein Gemisch aus Fumarsäure und/oder Maleinsäure und Adipinsäure verwendet wird.

8. Verwendung der Polyester gemäß einem oder mehreren der Ansprüche 1 bis 7 als haftungsverbessernder Zusatz.

9. Formulierungen, enthaltend Polyester gemäß einem oder mehreren der Ansprüche 1 bis 7.

10. Formulierungen gemäß Anspruch 9, **dadurch gekennzeichnet, dass** sie Hilfs-und Zusatzstoffe ausgewählt aus Inhibitoren, Wasser und/oder organischen Lösemitteln, Neutralisationsmitteln, grenzflächenaktiven Substanzen, Sauerstoff- und/oder Radikalfängern, Katalysatoren, Lichtschutzmitteln, Farbaufhellern, Photosensibilisatoren, Thixotropiermitteln, Hautverhinderungsmitteln, Entschäumern, Antistatika, Eindickungsmitteln, thermoplastischen Additiven, Farbstoffen, Pigmenten, Brandschutzausrüstungen, internen Trennmitteln, Füllstoffen und/oder Treibmitteln, enthalten.

## Claims

1. Polyesters based on dicarboxylic or polycarboxylic acids and diols, **characterized in that** they comprise at least one unsaturated dicarboxylic or polycarboxylic acid and at least one alkoxylated diol, wherein as alkoxylated diol, compounds of the general formula (I)
R-O(CH₂CH₂O)ₐ(CH₂CHCH₃O)_{b}-H (I)
are used where
R = tricyclodecanedimethanol, 1,2-propanediol, cyclohexanedimethanol, and neopentyl glycol,
a = 0 to 20, preferably 5 to 12, and/or
b = 0 to 20, preferably 5 to 12, with the proviso that a+b ≥ 1.

2. Polyesters according to Claim 1, **characterized in that** as unsaturated dicarboxylic or polycarboxylic acid, citraconic, fumaric, itaconic, maleic and/or mesaconic acid is used.

3. Polyesters according to Claim 1 or 2, **characterized in that** the diols are alkoxylated with ethylene oxide and/or propylene oxide.

4. Polyesters according to one or more of Claims 1 to 3, **characterized in that** the molar ratio of the alkoxylated diol to the dicarboxylic or polycarboxylic acids is 0.5 - 2:1.

5. Polyesters according to one or more of Claims 1 to 4, **characterized in that** the polyesters have an acid number, determined according to DIN EN ISO 2114, of between 1 and 150 mg KOH/g.

6. Polyesters according to one or more of Claims 1 to 5, **characterized in that** the polyesters have an OH number, determined according to DIN 53240-2, of between 1 and 200 mg KOH/g.

7. Polyesters according to one or more of Claims 1 to 6, **characterized in that** as alkoxylated diol, the ethoxylated or propoxylated tricyclodecanedimethanol of the isomeric compounds 3,8-bis(hydroxymethyl)tricyclo[5.2.1.0^{2,6}]decane, 4,8-bis(hydroxymethyl)tricyclo[5.2.1.0^{2,6}]decane and 5,8-bis(hydroxymethyl)tricyclo[5.2.1.0^{2,6}]decane is used, and as dicarboxylic or polycarboxylic acids, a mixture of fumaric acid and/or maleic acid and adipic acid is used.

8. Use of the polyesters according to one or more of Claims 1 to 7 as an adhesion-promoting additive.

9. Formulations comprising polyesters according to one or more of Claims 1 to 7.

10. Formulations according to Claim 9, **characterized in that** they comprise auxiliaries and adjuvants selected from inhibitors, water and/or organic solvents, neutralizing agents, surface-active substances, oxygen scavengers and/or radical scavengers, catalysts, light stabilizers, colour brighteners, photosensitizers, thixotropic agents, anti-skinning agents, defoamers, antistats, thickeners, thermoplastic additives, dyes, pigments, flame retardants, internal release agents, fillers and/or propellants.

## Revendications

1. Polyesters à base d'acides dicarboxyliques ou polycarboxyliques et de diols, **caractérisés en ce qu'**ils comprennent au moins un acide dicarboxylique ou polycarboxylique insaturé et au moins un diol alcoxylé, en tant que diol alcoxylé, des composés de formule générale (I)
R-O(CH₂CH₂O)ₐ(CH₂CHCH₃O)_{b}-H (I)
étant utilisés avec
R = le tricyclodécanediméthanol, le propane-1,2-diol, le cyclohexanediméthanol et le néopentylglycol,
a = 0 à 20, de préférence 5 à 12 et/ou
b = 0 à 20, de préférence 5 à 12,
à condition que a + b ≥ 1.

2. Polyesters selon la revendication 1, **caractérisés en ce qu'**en tant qu'acide dicarboxylique ou polycarboxylique insaturé, l'acide citraconique, fumarique, itaconique, maléique et/ou mésaconique est utilisé.

3. Polyesters selon la revendication 1 ou 2, **caractérisés en ce que** les diols sont alcoxylés avec de l'oxyde d'éthylène et/ou de l'oxyde de propylène.

4. Polyesters selon une ou plusieurs des revendications 1 à 3, **caractérisés en ce que** le rapport molaire du diol alcoxylé aux acides dicarboxyliques ou polycarboxyliques est de 0,5-2:1.

5. Polyesters selon une ou plusieurs des revendications 1 à 4, **caractérisés en ce que** les polyesters ont un indice d'acide, déterminé selon la méthode DIN EN ISO 2114, compris entre 1 et 150 mg de KOH/g.

6. Polyesters selon une ou plusieurs des revendications 1 à 5, **caractérisés en ce que** les polyesters ont un indice d'OH, déterminé selon la méthode DIN 53240-2, compris entre 1 et 200 mg de KOH/g.

7. Polyesters selon une ou plusieurs des revendications 1 à 6, **caractérisés en ce qu'**en tant que diol alcoxylé, le tricyclodécanediméthanol éthoxylé ou propoxylé constitué des composés isomères 3,8-bis(hydroxyméthyl)tricyclo[5.2.1.0^{2,6}]décane, 4,8-bis(hydroxyméthyl)tricyclo[5.2.1.0^{2,6}]décane et 5,8-bis(hydroxyméthyl)tricyclo[5.2.1.0^{2,6}]décane est utilisé et en tant qu'acides dicarboxyliques ou polycarboxyliques, un mélange d'acide fumarique et/ou d'acide maléique et d'acide adipique est utilisé.

8. Utilisation des polyesters selon une ou plusieurs des revendications 1 à 7 en tant qu'additif promoteur d'adhérence.

9. Formulations comprenant des polyesters selon une ou plusieurs des revendications 1 à 7.

10. Formulations selon la revendication 9, **caractérisées en ce qu'**elles comprennent des agents auxiliaires et des adjuvants choisis parmi les inhibiteurs, l'eau et/ou les solvants organiques, les agents de neutralisation, les substances tensioactives, les piégeurs d'oxygène et/ou les piégeurs de radicaux, les catalyseurs, les photostabilisants, les azurants optiques, les photosensibilisateurs, les agents thixotropiques, les agents antipeau, les antimousses, les agents antistatiques, les épaississants, les additifs thermoplastiques, les colorants, les pigments, les agents ignifugeants, les agents antiadhésifs internes, les charges et/ou les propulseurs.
